(19) Europäisches Patentamt
European Patent Office
Office européen des brevets

(11) Veröffentlichungsnummer: **0 648 521 A2**

## (12) EUROPÄISCHE PATENTANMELDUNG

(21) Anmeldenummer: 94116069.9

(22) Anmeldetag: 12.10.94

(51) Int. Cl.6: **B01D 15/00**, B01J 20/28, B01D 53/26, B01D 11/04

(30) Priorität: 15.10.93 DE 4335296

(43) Veröffentlichungstag der Anmeldung:
19.04.95 Patentblatt 95/16

(84) Benannte Vertragsstaaten:
**AT BE CH DE DK ES FR GB GR IE IT LI LU MC NL PT SE**

(71) Anmelder: **Umsicht Institut für Umwelt- und Sicherheitstechnik e.V.**
**Osterfelder Strasse 3**
**D-46047 Oberhausen (DE)**

(72) Erfinder: **Gross, Dipl.-Ing. Hans-Jürgen**
**Castroper Str. 102**
**D-45665 Recklinghausen (DE)**
Erfinder: **Althaus, Dr. Wilhelm**
**Drosselstr. 3**
**D-59439 Holzwickede (DE)**

(74) Vertreter: **Pfenning, Meinig & Partner**
**Mozartstrasse 17**
**D-80336 München (DE)**

(54) **Gel-Extraktion.**

(57) Die Erfindung betrifft ein Verfahren zum Auf- bzw. Abtrennen von in Prozeßströmen enthaltenen niedermolekularen flüssigen Stoffen, wie z.B. Trennen von Wasser und höhermolekularen Stoffen bzw. kondensierbaren Komponenten aus Gasen, das durch die folgenden Verfahrensschritte gekennzeichnet ist:

a) daß der Prozeßstrom über eine ein durch Einwirken von physikalisch-chemischen Einflußgrößen kollabierbares wasserunlösliches hydrophiles Gel enthaltende Absorptionseinheit bzw. die Absorptionseinheit durch den Prozeßstrom geführt wird, wobei das Gel mit dem niedermolekularen flüssigen Stoff beladen wird,

b) daß nach der Beladung das die niedermolekularen Bestandteile enthaltende Gel abgetrennt wird, und

c) daß anschließend das Gel durch Einwirken von physikalisch-chemischen Einflußgrößen zum Kollabieren gebracht wird und dann die abgetrennten niedermolekularen Bestandteile aus der Absorptionseinheit entfernt werden.

Figur 1:

EP 0 648 521 A2

Die Erfindung betrifft ein Verfahren gemäß dem Oberbegriff des Patentanspruches 1 sowie Vorrichtungen zur Durchführung des Verfahrens.

Die Verwendung von Gelen in der Gelchromatographie ist seit langem bekannt. Bei diesem Verfahren werden Gele (z.B. Dextran, Agarose, Kieselgele usw.) in eine Säule gefüllt und die Säule mit einer flüssigen Phase, in der sich gelöste Polymere befinden, beaufschlagt, wobei die Polymermoleküle in alle Teile des Netzwerkes diffundieren, die ihnen nicht aufgrund ihrer Größe versperrt sind. Folglich dringen die kleineren Moleküle des Gelösten tiefer ein und werden länger in der Säule zurückgehalten als die größeren Moleküle, so daß dadurch eine Auftrennung von höherund niedrigmolekularen Stoffen erfolgen kann.

Außer diesem Einsatzgebiet hat die Anwendung hydrophiler polymerer Materialien im medizinischen Bereich, in der Nahrungsmittelindustrie und im landwirtschaftlichen Sektor in jüngster Zeit zugenommen (DE-PS 26 33 249). Es sind dabei für die verschiedensten Anwendungsgebiete unterschiedliche Gele vorgeschlagen worden (GB 21 13 196, EP 03 35 703, EP 01 90 495, US 4,737,290).

Weiterhin ist es bekannt, daß Gele unter anderem unter Einwirkung von Temperatur "kollabieren". Unter dieser Eigenschaft wird in der Literatur die reversible Abgabe des in einem Gel aufgenommenen Lösungsmittels durch Einwirken von einer physikalischen oder chemischen Einflußgröße verstanden. Unter Einwirkung von Temperatur sind danach bestimmte Gele in der Lage, das aufgenommene Lösungsmittel wieder reversibel abzugeben (JP 4-139206; JP 58-201810; CA Vol.116, 1992, Ref. 195407g, S.38; CA Vol.106, 1987, Ref. 214805x, S.30).

Im Bereich der Abwasserbehandlung sind jedoch bisher lediglich linear vernetzte Polymere als Flockungshilfsmittel eingesetzt worden. Flockungsmittel werden zur Erhöhung des Aggregationszustandes von suspendierten Feststoffteilchen eingesetzt. Hierzu werden spezielle linear vernetzte Polymere und verschiedene Verfahren vorgeschlagen (GB 20 64 549 Der.Ref.; DE-OS 26 51 555; BE 766 423; US 4,536,294).

Wie vorstehend beschrieben, werden Gele bisher in der Abwasserbehandlung außer als Flockungshilfsmittel nicht eingesetzt. Alle gängigen Verfahren der Abwasserbehandlung (mechanische Abwasserbehandlung, biologische Abwasserbehandlung, physikalisch-chemische Reinigungsverfahren, Flockung und Fällung, Ionenaustauscher und Adsorberharze, Adsorption, Ultrafiltration und Reverse-Osmose) sind dabei mit einem großen verfahrenstechnischen Aufwand und mit einem hohen Energieverbrauch verbunden, da die Abtrennung der Verunreinigung mittels eines Hilfsmittels erfolgt wie z.B. einem Adsorbens, einem Flockungsmittel oder im Falle von biologischen Verfahren mit geeigneten Enzymen. Dadurch wird aber in vielen Fällen eine Beladung des Abwassers mit einem Hilfsstoff verursacht, was wiederum geeignete Maßnahmen erfordert, um die angestrebte Reinheit des Abwassers zu gewährleisten. Dies führt zu verfahrenstechnisch aufwendigen sowie kosten- und energieaufwendigen Verfahren.

Ausgehend von diesem Stand der Technik ist es die Aufgabe der vorliegenden Erfindung, Verfahren und entsprechende Vorrichtungen zur Durchführung des Verfahrens vorzuschlagen, die ein Auf- bzw. Abtrennen von in Prozeßströmen, insbesondere Abwassern, flüssigen Gemischen oder feuchten Gasen enthaltenen niedermolekularen Stoffen wie z.B. Wasser von höhermolekularen Stoffen mit möglichst geringem technischen Aufwand und einem vergleichsweise niedrigen Energieverbrauch ermöglicht.

Die Lösung dieser Aufgabe erfolgt hinsichtlich des Verfahrens durch die kennzeichnenden Merkmale des Anspruches 1 in bezug auf die Vorrichtung zur Durchführung des Verfahrens durch die kennzeichnenden Merkmale der Ansprüche 24, 26, 28 und 29. In den Unteransprüchen sind vorteilhafte Weiterbildungen angegeben.

Durch den erfindungsgemäßen Einsatz einer Absorptionseinheit mit darin enthaltenen kollabierbaren Gelen wird erstmals erreicht, daß im Gegensatz zum Stand der Technik nicht die Verunreinigung mittels z.B. eines Adsorbens, einer Fällung mit Hilfe eines Flockungshilfsmittels, durch biologischen Abbau oder durch sonstige mechanische oder physikalische Verfahren beseitigt wird, sondern daß die Abwasserreinigung dadurch erfolgt, daß das im verunreinigten Abwasser enthaltene Reinwasser durch das Gel entfernt wird.

Dies bringt den Vorteil mit sich, daß keine zusätzlichen Substanzen auftreten, die mit Verunreinigungen beladen sind und hinterher entsorgt werden müssen. Bei den bisherigen Verfahren, z.B. zur Abwasseraufbereitung des Standes der Technik, wird ja, wie vorstehend beschrieben, die Verunreinigung z.B. mittels eines Flockungshilfsmittels oder durch Fällung oder durch sonstige physikalisch-chemische Methoden oder besonders durch biologischen Abbau beseitigt. Dabei entstehen aber in jedem Fall Produkte, z.B. ein Adsorbens mit eingelagerten Verunreinigungen oder auch biologische Abbauprodukte, die wiederum gesondert aufgearbeitet werden müssen.

Im Gegensatz dazu ermöglicht das nun vorgestellte erfindungsgemäße Verfahren, daß nicht die höhermolekularen Bestandteile entfernt werden, sondern durch das kollabierbare Gel die im Gemisch enthaltene reine Lösung abgetrennt wird. Vorteilhaft bei diesem ganzen Verfahren ist, daß auch bei Durchführung im großtechnischen Maßstab nur ein geringer verfahrenstechnischer Aufwand notwendig ist. Durch den Einsatz der reversibel anwendbaren Gele entstehen nur geringe Anlagenkosten und auch äußerst geringe Energiekosten.

In analoger Weise ist die Aufkonzentrierung höhermolekularer Wertstoffe in Prozeßströmen möglich, indem der niedermolekulare Anteil entfernt wird und dieser Prozeßstrom so für eine Rückführung aufkonzentriert wird.

Die Vorgehensweise läßt sich analog zur Abtrennung kondensierbarer Bestandteile aus feuchten Gasen anwenden, indem vom Gel kondensierbare Bestandteile des Gases aufgenommen werden und z.B. nach Temperaturerhöhung das Kondensat wieder abgegeben wird. Die Absorptionswärme kann durch Einbauten innerhalb der Absorptionseinheit abgeführt werden, die gleichzeitig zur Regeneration der Absorptionseinheit durch Aufprägung einer Temperaturänderung genutzt werden können.

Der hauptsächliche Energiebedarf wird nur dadurch verursacht, daß das Gel aufgrund von physikalischen bzw. chemischen Einflußgrößen zum Kollabieren gebracht werden muß. Damit unterscheidet sich das hier vorgestellte Verfahren grundlegend von den bisherigen Methoden zur Abwasserbehandlung bzw. Gemischtrennung.

Für das erfindungsgemäße Verfahren eignen sich alle Gele, die kollabieren können. Besonders bevorzugt sind Polysaccharide und Polyacrylamide.

Ein Überblick über bevorzugte Gele ist aus der folgenden Zusammenstellung zu entnehmen. BP bedeutet dabei Basispolymer, CP bedeutet Copolymer.

**Gele auf der Basis von Acrylamid**

BP: **Acrylamid**
CP: 2-(acryloyloxyl)ethylsäurephosphat
2-Acrylamido-2-methylpropansulfonsäure
2-Dimethylaminoethylacrylat
2,2´-bis(acrylamido)essigsäure
3-(methacrylamido)propyltrimethylammoniumchlorid
Acrylamidomethylpropandimethylammoniumchlorid
Acrylat
Acrylonitril
Acrylsäure
Diallyldimethylammoniumchlorid
Diallylammoniumchlorid
Dimethylaminoethylacrylat
Dimethylaminoethylmethacrylat
Ethylenglykoldimethacrylat
Ethylenglykolmonomethacrylat
Methacrylamid
Methylacrylamidopropyltrimethylammoniumchlorid
N,N-dimethylacrylamid
N-[2[[[5-(dimethylamino)1-naphthalenyl]-sulfonyl]-amino]-ethyl]-
2-acrylamid
N-[3-(dimethylamino)propyl]acrylamidhydrochlorid
N-[3-(dimethylamino)propyl]methacrylamidhydrochlorid

BP: **Poly(diallyldimethylammoniumchlorid)**
Natrium 2-(2-carboxylbenzoyloxy)ethylmethacrylat
Natriumacrylat
Natriumallylacetat
Natriummethacrylat
Natriumstyrolsulfonat
Natriumvinylacetat
Triallylamin
Trimethyl(N-acryloyl-3-aminopropyl)ammoniumchlorid
Triphenylmethan-leuco-derivate
Vinyl-terminated-polymethysiloxan

| | |
|---|---|
| BP: | N-(2-ethoxyethyl)acrylamid |
| BP: | N-3-(methoxypropyl)acrylamid |
| BP: | N-(3-ethoxypropyl)acrylamid |
| BP: | N-cyclopropylacrylamid |
| BP: | N-n-propylacrylamid |
| BP: | N-(tetrahydrofurfuryl)acrylamid |

**Gele auf der Basis von N-Isopropylacrylamid**

BP: N-Isopropylacrylamid
CP: 2-(diethylamino)ethylmethacrylat
2-(dimethylamino)ethylmethacrylat
2-acrylamido-2-methyl-1-propanesulfonacrylat
Acrylsäure
Acrylamid
Alkylmethacrylat
Bis(4-dimethylamino)phenyl)(4-vinylphenyl)methyl leucocyanid
Concanavalin A (Lecitin)
Hexylmethacrylat
Laurylmethacrylat
Methacrylsäure
Methyacrylamidopropyltrimethylammoniumchlorid
n-Butylmethacrylat
Poly(tetrafluoroethylen)
Polytetramethylenetherglykol
Natriumacrylat
Natriummethacrylat
Natriumvinylsulfonat
Vinyl-terminated-polymethysiloxan

| Gele auf der Basis von N,N´-diethylacrylamid | |
|---|---|
| **BP:** | **N,N´-diethylacrylamid** |
| **CP:** | Methyacrylamidopropyltrimethylammoniumchlorid |
| | N-acryloxysuccinimidester |
| | N-tert.-Butylacrylamid |
| | Natriummethacrylat |

| Gele auf der Basis von Acrylat | |
|---|---|
| **BP:** | **2-Dimethylaminoethylacrylat** |
| **CP:** | 2-Acrylamido-2-methylpropansulfonsäure |
| | Acrylamid |
| | Triallylamin |

| **BP:** | **Acrylat** |
|---|---|
| **CP:** | Acrylamid |

| **BP:** | **Methylmethacrylat** |
|---|---|
| **CP:** | Divinylbenzen |
| | N,N-dimethylaminoethylmethacrylat |
| | Poly(oxytetramethylendimethacrylat) |

| **BP:** | **Poly(2-hyroxyethylmethacrylat)** |
|---|---|

| **BP:** | **Poly(2-hydroxlpropylmethacrylat)** |
|---|---|

| **BP:** | **Polyethylenglykolmethacrylat** |
|---|---|

| Gele auf der Basis verschiedener Monomere | |
|---|---|
| **BP:** | Acrylsäure |
| **CP:** | Methacrylamidopropyltrimethylammoniumchlorid |

| **BP:** | Collagen |
|---|---|

| **BP:** | Dipalmitoylphosphatidylethanolamin |
|---|---|

| **BP:** | Poly-[4,6-decadien-1.10-diol-bis(n-butoxy-carbonylmethylurethan)] |
|---|---|

| **BP:** | Poly-[bis[aminoethoxy)ethoxy]phosphazen] |
|---|---|

| **BP:** | Poly-[bis[(butoxyethoxy)-ethoxy]phosphazen] |
|---|---|

| BP: | Poly-[bis[(ethoxyethoxy)-ethoxy]phosphazen] |
|---|---|
| BP: | Poly-[bis[(methoxyethoxy)-ethoxy]phosphazen] |
| BP: | Poly-[bis(methoxyethoxy)phosphazen] |
| BP: | Polydimethylsiloxan |
| BP: | Polyethylenoxid |
| BP: | Poly(ethylen-dimethylsiloxan-ethylenoxid) |
| BP: | Poly(N-acrylopyrrolidin) |
| BP: | Poly-[n,n-dimethyl-N-[(methacryloyloxy)-ethyl]-N-(3-sulfopropyl)-ammonium betain] |
| BP: | Polymethacrylsäure |
| BP: | Polymethacryloyldipeptide |
| BP: | Polyvinylalkohol |
| BP: | Polyvinylalkohol-vinylacetat |
| BP: | Polyvinylmethylether |
| BP:<br>CP: | Furan modifiziertes poly(n-acetylethylenimin)<br>Maleinimid modifiziertes poly(n-acetylethylenimin) |
| | Sephadex G-100 (Sigma Chemical Co., St. Louis) |
| | Biogel P-2, P-4, P-6, P-30, P-600 Bio-Rad labaratories, Richmond |

Wie vorstehend bereits in der Einleitung beschrieben, sind diese Gele in der Lage, das aufgenommene Lösungsmittel, d.h. z.B. im Falle von Abwasser das darin enthaltene Reinwasser, bzw. bei flüssigen Gemischen das Lösungsmittel bzw. den kondensierbaren Anteil wieder reversibel abzugeben. Dies erfolgt durch geringe Änderung des physikalischen oder chemischen Umgebungszustandes (je nach Struktur und Zusammensetzung des Gels), was ein Kollabieren des Gels (Zusammenbruch der Gelstruktur) zur Folge hat, so daß das aufgenommene Medium wieder freigesetzt wird. Die Vorgänge des Quellens (Lösungsmittelaufnahme) und Kollabierens (Lösungsmittelabgabe) sind thermodynamisch mit einem physikalischen Phasenübergang vergleichbar, ohne jedoch einen entsprechend großen Energiebedarf zu erfordern.

Die Einflußgrößen auf den Phasenübergang (pH, Temperatur etc.), das Quellvermögen, die Quellkinetik und die Selektivität der Lösungsmittelaufnahme werden dabei durch die Wahl der Monomeren, durch das Initiatorsystem, durch die Struktur des Vernetzers und durch den Vernetzungsgrad des Gels bestimmt. Abhängig von der Struktur des Gels kann der Phasenübergang somit durch Änderung der Ionenstärke der Lösung, durch pH-Wert-Änderung, Temperaturänderung oder Anlegen einer elektrischen Spannung herbeigeführt werden.

Verfahrensmäßig wird nun vorteilhaft so vorgegangen, daß eine Absorptionseinheit vorgeschlagen wird, die ein wie vorstehend beschriebenes Gel enthält. Eine derartige Absorptionseinheit kann so aufgebaut sein, daß sie von dem zu reinigenden Abwasser bzw. den genannten anderen Medien durchströmt wird, oder daß die Absorptionseinheit selbst durch das zu reinigende Abwasser bzw. die genannten anderen Medien geführt wird. Die Gele werden dabei mit der verunreinigten Lösung in Kontakt gebracht und quellen dabei durch Lösungsmittelaufnahme, d.h. z.B. durch das im Abwasser enthaltene Reinwasser bzw. Aufnahme kondensierbarer Bestandteile aus Gasen an. Da die Gele selbst unlöslich sind, kommt es im Gegensatz zu anderen Extraktionsverfahren zu keiner Beladung des Abwassers mit dem Hilfsstoff.

In einem zweiten Verfahrensschritt wird dann, wenn das Gel mit Lösungsmittel bzw. Kondensat beladen ist, die zurückbleibende, in der Regel höherviskose, die höhermolekularen Bestandteile enthaltende Lösung bzw. das enthaltene Gas abgetrennt. In einem weiteren Verfahrensschritt wird dann durch Einwirken von physikalisch-chemischen Einflußgrößen auf das Gel dieses zum Kollabieren gebracht, so daß das im Gel enthaltene Lösungsmittel bzw. Kondensat desorbiert wird und somit eine Abtrennung der höhermolekularen bzw. kondensierbaren Bestandteilen erfolgt ist.

Das vorstehend beschriebene Verfahren kann dabei im Bereich flüssiger Gemische besonders für folgende Anwendungen eingesetzt werden:

- Reinigung von Abwässern aus der Lebensmittelindustrie (Zucker- und Stärkefabriken, Molkereien oder Obst- und Gemüseverwertung).
- Reinigung von Abwässern aus der Textilindustrie.
- Reinigung von Abwässern aus der Papierindustrie.
- Behandlung von Abwässern aus Autowaschstraßen.
- Behandlung von Abwässern aus Kfz-Werkstätten.
- Abtrennung von höhermolekularen organischen Substanzen.
- Aufkonzentrierung von Fermentationsbrühen.
- Aufkonzentrierung von Lattices,
- Abtrennung von Tensiden aus wäßrigen Lösungen.
- Behandlung von Schlachthofabwässern.
- Entfernung von Wasser aus Reaktionsgemischen.
- Entfernung von Wasser aus höhermolekularen Lösungen.
- Abtrennung von Farbstoffen aus wäßrigen Lösungen, und
- Emulsionstrennung bei der Metallverarbeitung, und
- Abtrennung lipophiler Substanzen aus Abwässern der Kosmetikindustrie.

Weitere Merkmale, Einzelheiten und Vorzüge der Erfindung ergeben sich aus der folgenden Beschreibung mehrerer bevorzugter Ausführungsformen anhand der Zeichnungen. Hierbei zeigen:

Fig. 1a    die Absorptionseinheit in Form eines zylindrischen Behälters,
Fig. 1b    einen kugelförmigen Gelkörper,
Fig. 2a    eine Gelfolie,
Fig. 2b    eine Absorptionseinheit in Form einer um zwei Umlenkrollen umlaufenden Endlos-Gelfolie,
Fig. 2c    den Querschnitt durch die Absorptionseinheit mit umlaufender Endlosfolie,
Fig. 3     den Querschnitt durch ein Gelpaket,
Fig. 4     die Gelextraktion im Rührbehälter,
Fig. 5     die Gelextraktion im Wanderbett,
Fig. 6     verschiedene Stützkörper für die Gele im Festbett, und
Fig. 7     eine Gelmembran (Rohrmodul).

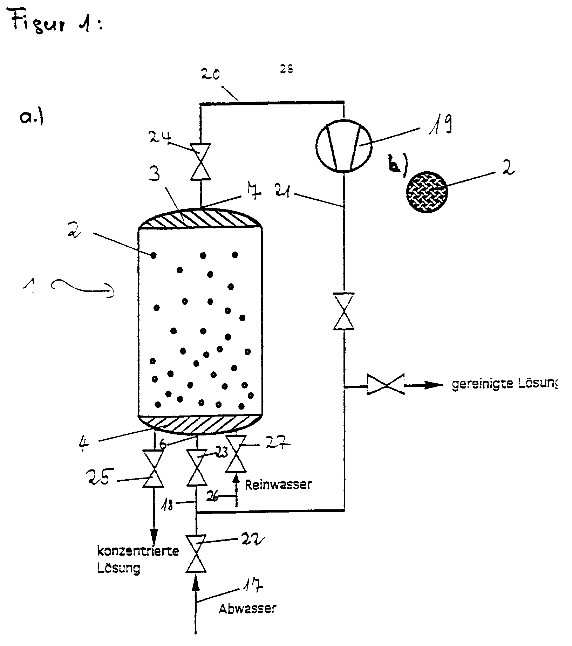

Fig. 1 zeigt eine Ausführungsform, bei der die Absorptionseinheit aus einem zylindrischen Hohlkörper 1 besteht, der mit annähernd kugelförmigen Gelkörpern 2 gefüllt ist. Die im Innenraum angeordneten, annähernd kugelförmigen Gelkörper 2 werden durch die Siebeinsätze 3, 4 innerhalb des Hohlraumes des zylindrischen Hohlkörpers 1 fixiert. Durch diese Siebeinsätze 3, 4 wird ein sicherer Halt der Gelkörper 2 ermöglicht. Zum Betrieb der Vorrichtung wird z.B. das Abwasser über eine Leitung 17 und eine Leitung 18 durch die Zuführungseinrichtung 6, die am Boden des zylindrischen Hohlgefäßes 1 angeordnet ist, in die Absorptionseinheit eingespeist. Das Abwasser oder das flüssige Gemisch oder das feuchte Gas durchströmt nun die in dem zylindrischen Hohlkörper 1 durch die Siebeinsätze 3, 4 fixierten kugelförmigen Gele 2, so daß diese mit dem in dem Abwasser bzw. dem flüssigen Gemisch oder dem feuchten Gas enthaltenen Lösungsmittel bzw. kondensierbaren Anteilen, d.h. mit dem Reinwasser, bzw. mit dem reinen Lösungsmittel bzw. mit dem Kondensat beladen werden.

Zur Aufrechterhaltung des Kreislaufs ist im Falle der Abwasserreinigung oder der Behandlung flüssiger Gemische eine Pumpe 19 vorgesehen, die das Abwasser oder das flüssige Gemisch über die Leitungen 20 und 21 pumpt. Ist nun das Gel 2 in der Weise beladen, daß eine höhere Beladung oder ein Gleichgewichtszustand erreicht ist, so wird mittels der vorgesehenen Absperrorgane die Absorptionseinheit vom Abwasserstrom abgekoppelt. Im Beispielsfall sind hierfür die Absperrorgane 22, 23 und 24 vorgesehen.

Im folgenden wird dann die konzentrierte Lösung, d.h. die die höhermolekulargewichtigen Bestandteile enthaltende Lösung, über das Ventil 25 aus dem zylindrischen Hohlgefäß 1 abgelassen. In einem dritten Verfahrensschritt wird z.B. eine heiße wäßrige Lösung über das Ventil 22 und 23 durch die beladenen Gele geleitet. Dadurch kollabieren die mit dem Lösungsmittel beladenen Gelkörper 2, und das Lösungsmittel desorbiert und wird gleichzeitig von dem die Absorptionseinheit passierenden Reinwasser mitgenommen.

EP 0 648 521 A2

Die so erhaltene gereinigte Lösung kann dann über eine Abzweigungsleitung aus der Leitung 21 aus der Absorptionseinheit entfernt werden. In einer Ausgestaltung der Erfindung ist dann noch vorgesehen, daß nach dem Ablassen der konzentrierten Lösung und vor dem Kollabieren der Gelkörper 2 ein Spülschritt mit Spülflüssigkeit über die Leitung 26 über das Ventil 27 durchgeführt wird.

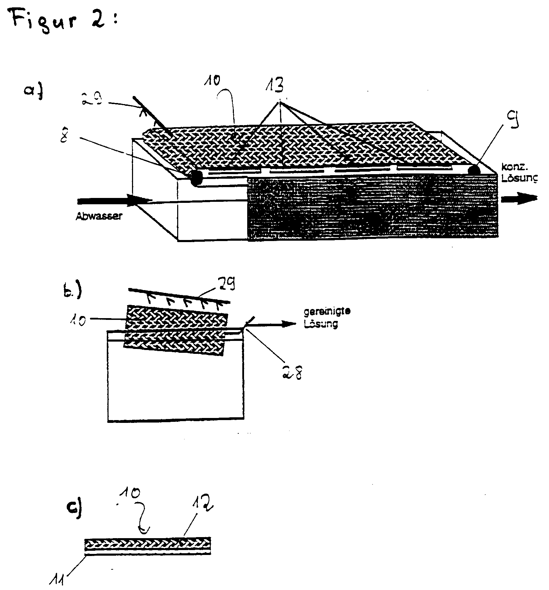

Fig. 2 zeigt die Ausführungsform der Erfindung, bei der die Absorptionseinheit in Form einer über zwei Umlenkrollen 8 und 9 umlaufenden Gelfolie 10 ausgebildet ist. Die umlaufende Gelfolie 10 besteht dabei aus einem Foliengrundmaterial 11, auf das einseitig, und zwar auf der Außenseite oder zwischen zwei Folien ein Gel 12 aufgebracht ist (Fig. 2c).

Diese umlaufende Gelfolie wird in dem zu reinigenden Abwasser so angeordnet, daß zumindest eine Teilfläche der umlaufenden Gelfolie 10 mit dem Abwasser in Berührung kommt. Die Umlaufgeschwindigkeit der Gelfolie 10 sowie die Gelfläche ist dabei so bemessen, daß sie auf das zu reinigende Abwasser abgestimmt ist. Diese umlaufende Gelfolie wird durch das Abwasser geführt, bzw. das Abwasser kann zusätzlich auch noch an der Gelfolie vorbeiströmen, so daß ein Beladen des Teilbereiches der Gelfolie, der in die zu reinigende Lösung eintaucht, mit der in dem Abwasser enthaltenen Reinlösung erreicht wird.

Besonders vorteilhaft bei dieser Ausgestaltung der Erfindung ist, daß durch eine entsprechende Dimensionierung der Gelfolie 10 das Verfahren so ausgestaltet werden kann, daß das Abwasser nach Passieren der Gelfolie als konzentrierte Lösung, die nur noch in Form einer höherviskosen Lösung, die die höhermolekularen Bestandteile enthält, vorliegt.

Durch die vorteilhafte Ausgestaltung der Endlosfolie 10, die um die Umlenkrollen 8, 9 geführt wird, wird erreicht, daß die Seite der umlaufenden Gelfolie 10, die nicht mit dem Abwasser in Berührung kommt, einer Wärmeübertragungsvorrichtung 13 ausgesetzt wird, so daß dann ein Kollabieren des Gels erfolgt.

Verfahrensmäßig ist dabei die Vorrichtung so ausgestaltet, daß die Gelfolie 10 im Winkel zur Oberfläche des zu reinigenden Abwassers angeordnet ist, so daß das durch das Kollabieren des Geles aus der Gelfolie desorbierte gereinigte Wasser entlang der Fläche der Gelfolie zum tiefsten Punkt, hier bei der Umlenkrolle 9, läuft und über geeignete Auffangvorrichtungen 28 abgeführt werden kann. Zur Spülung ist eine Spülvorrichtung 29 vorgesehen (Fig. 2b).

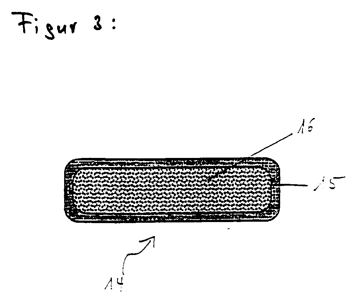

Fig. 3 zeigt die Ausführungsform der Absorptionseinheit in Form eines Gelpaketes. In Fig. 3 ist der Querschnitt durch ein erfindungsgemäßes Gelpaket dargestellt. Das Gel 16 ist dabei allseitig von einer Folie oder einem Gewebe oder einer anderen dünnen durchbrochenen Wand 15 umschlossen, wobei gewährleistet sein muß, daß die Folie oder das Gewebe oder die Wand 15 so ausgebildet ist, daß sie das Abwasser, das gereinigt werden soll, hindurchtreten läßt.

Erfindungsgemäß werden nun derartige Gelpakete 14 einfach in das zu reinigende Abwasser eingeführt. Nach Beladen der Gele werden diese Gelpakete entweder mechanisch oder durch andere geeignete Verfahren aus dem Abwasser entfernt, und die erhaltene konzentrierte Lösung wird abgetrennt. Die abgetrennten Gelpakete 14 werden dann durch geeignete physikalische-chemische Einflußgrößen zum Kollabieren gebracht und die dabei desorbierte Flüssigkeit aufgefangen.

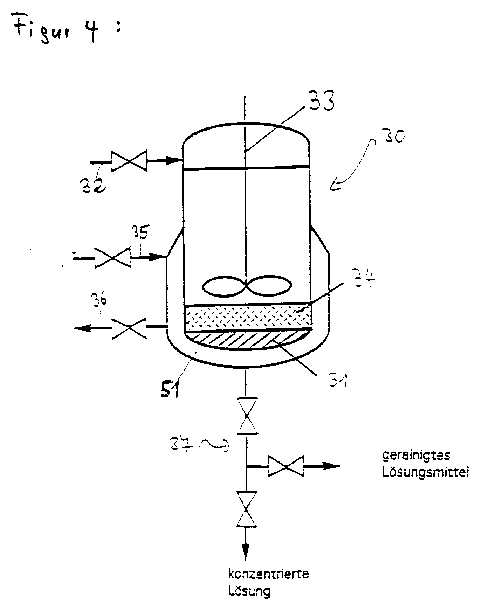

Fig. 4 zeigt eine Ausführungsform des erfindungsgemäßen Verfahren, bei der anstatt der Absorptionseinheit in Form eines vollständig mit Gelkörpern gefüllten Hohlkörpers nach Fig. 1 ein Rührbehälter 30 als Absorptionseinheit vorgesehen ist. Der Rührbehälter 30 ist dabei als zylindrischer Hohlkörper ausgebildet und weist an seinem unteren Ende eine Rückhaltevorrichtung 31 z.B. in Form eines Siebes auf. Zum Betrieb der Absorptionseinheit wird dabei das in dem Hohlkörper befindliche Gel durch den Zulauf 32 mit Abwasser versorgt. Mittels des Rührers 33 werden die Gele im zylindrischen Hohlkörper suspendiert. Nach Beladen der Gele mit dem niedrigmolekularen Anteil wird die Rühreinrichtung 33 abgestellt, worauf sich die Gele im unteren Bereich 34 des zylindrischen Hohlkörpers absetzen. Das Kollabieren der Gele wird dadurch erreicht, daß die im unteren Teil 34 befindlichen Gele einer Wärmeeinwirkung ausgesetzt werden. Die Wärmeeinwirkung wird in diesem Falle durch einen im unteren Bereich des Hohlkörpers angeordneten umlaufenden Heißkreislauf 15 bewerkstelligt. Der Heißkreislauf 15 wird dabei über einen Zulauf 35 und einen Ablauf 36 mit einem heißen Medium versorgt. Die konzentrierte Lösung wie auch die gereinigte Lösung können dabei dann nacheinander über das Leitungssystem 37 abgenommen werden.

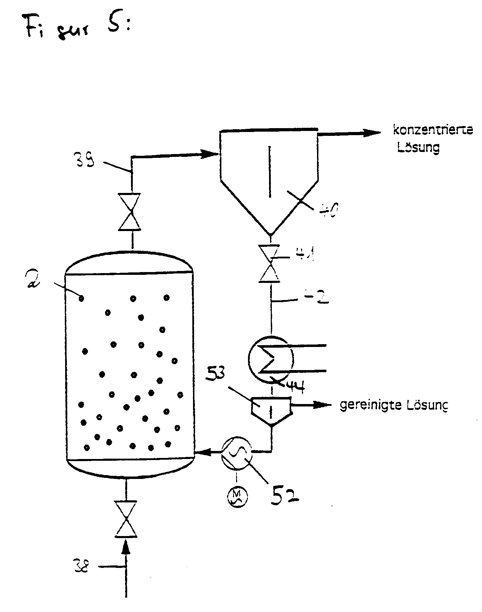

Fig. 5 zeigt die Ausführungsform des erfindungsgemäßen Verfahrens, bei der die Absorptionseinheit in Form eines Wanderbettes ausgebildet ist. Die Absorptionseinheit ist im Beispielsfalle wieder ein zylindrischer Hohlkörper, der mit Gelpartikeln 2 gefüllt ist. Die Gelpartikel werden dabei über einen Zulauf 38 mit dem Prozeßwasser, hier mit Abwasser, beaufschlagt. Nach Beladen der Gele werden diese über das Leitungssystem 39 einer Trenneinheit 40 zugeführt. In der Trenneinheit 40 erfolgt dann eine Auftrennung in eine feste und eine flüssige Phase (konzentrierte Lösung). Die konzentrierte Lösung wird dann an einer geeigneten Stelle aus der Trenneinrichtung 40 abgenommen. Das Gel wird anschließend über ein Ventil 41 mit einer Pumpe über den Gelkreislauf 42 in die Absorptionseinheit zurückgeführt. Im Gelkreislauf 42 ist noch eine Wärmeübertragungsvorrichtung 44 angeordnet, um die Gele durch Wärmeeinwirkung zu kollabie-

9

ren. Danach wird die Reinlösung an geeigneter Stelle 45 z.B. über eine Trennvorichtung 53 abgezogen.

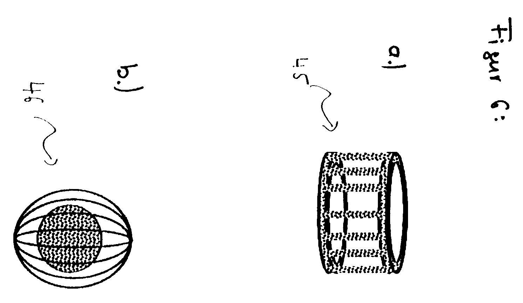

Fig. 6 zeigt zwei verschiedene Ausführungsformen verschiedener Stützkörper für Gele im Festbett. Fig. 6a zeigt dabei eine käfigförmige Ausgestaltung 45, wobei der poröse Stützkörper z.B. aus Keramik oder aus Kunststoff ist und die Gele durch Gelbildung auf der Oberfläche und/oder in den Poren fixiert sind. Fig. 6b zeigt eine Ausgestaltungsform, bei der eine Gelkugel in einem Käfig eingeschlossen ist, wobei die entsprechende Vorrichtung 46 wieder im Festbett eingesetzt werden kann.

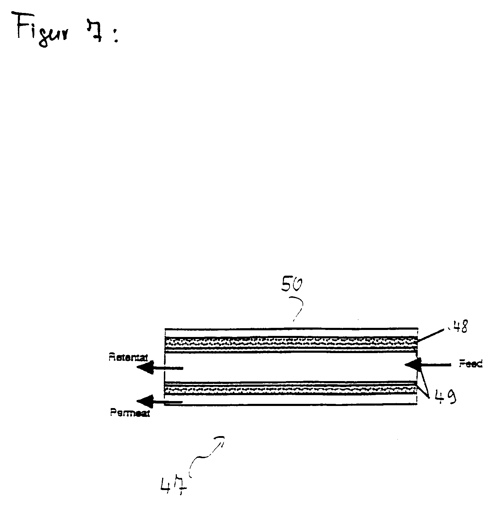

Fig. 7 zeigt die Ausführungsform der Trenneinheit als Gel-Membran in Form eines Rohrmoduls 47. In Fig. 7 ist der Querschnitt durch ein erfindungsgemäßes Gel-Membran-Modul 47 dargestellt. Das Gel 48 ist dabei auf einem rohrförmigen Stützkörper 49 aufgebracht und fixiert, wobei gewährleistet sein muß, daß die Volumenänderung des Gels 48 im wesentlichen in radialer Richtung erfolgt.

Erfindungsgemäß werden nun die zu trennenden Flüssigkeiten über derartige Gel-Membranen 50 geführt. Zu Beginn des Trennprozesses liegt eine erhöhte Temperatur an, so daß das Gel 48 in einem verdichteten Zustand vorliegt. Aufgrund des über der Membran 50 anliegenden Druckgefälles erfolgt der Durchtritt der niedermolekularen Substanzen durch die Membran 40. Nach dem Abtrennen der Substanzen mit niedrigen Molekulargewichten wird die Temperatur gesenkt, damit der Quellgrad vergrößert, und bei erneutem Überströmen der Membran 50 erfolgt der Durchtritt der Substanzen mit höheren Molekulargewichten. Durch mehrmaliges Wiederholen dieses Verfahrensschrittes kann so die vorliegende Lösung fraktioniert werden. Die Quellung und nachfolgende Kollabierung können auch nur zum Zweck der Membranreinigung bei Auftreten von Fouling-Erscheinungen, Verblockungen etc. herbeigeführt und die Anordnung ansonsten wie eine normale Membrantrenneinrichtung verwendet werden.

## Patentansprüche

1. Verfahren zum Auf- bzw. Abtrennen von in Prozeßströmen enthaltenen niedermolekularen flüssigen Stoffen, wie z.B. Trennen von Wasser und höhermolekularen Stoffen bzw. kondensierbaren Komponenten aus Gasen,
gekennzeichnet durch die Kombination folgender Verfahrensschritte:
a) daß der Prozeßstrom über eine ein durch Einwirken von physikalisch-chemischen Einflußgrößen kollabierbares wasserunlösliches hydrophiles Gel enthaltende Absorptionseinheit bzw. die Absorptionseinheit durch den Prozeßstrom geführt wird, wobei das Gel mit dem niedermolekularen flüssigen Stoff beladen wird,
b) daß nach der Beladung das die niedermolekularen Bestandteile enthaltende Gel abgetrennt wird, und
c) daß anschließend das Gel durch Einwirken von physikalisch-chemischen Einflußgrößen zum Kollabieren gebracht wird und dann die abgetrennten niedermolekularen Bestandteile aus der Absorptionseinheit entfernt werden.

2. Verfahren nach Anspruch 1,
dadurch gekennzeichnet, daß die hydrophilen Gele ausgewählt sind aus der Gruppe Polysacharide oder Polyacrylamide.

3. Verfahren nach Anspruch 1 bis 2,
dadurch gekennzeichnet, daß das Gel Poly-N-Isopropylacrylamid ist.

4. Verfahren nach Anspruch 1 bis 3,
dadurch gekennzeichnet, daß als physikalisch-chemische Einflußgrößen die Ionenstärke der Lösung oder die pH-Änderung oder die Temperaturänderung oder Licht oder ein Anlegen einer elektrischen Spannung ausgenutzt wird.

5. Verfahren nach Anspruch 1 bis 4,
dadurch gekennzeichnet, daß der Prozeßstrom ein Abwasser, ein flüssiges Gemisch oder ein kondensierbare Komponenten enthaltendes Gas (feuchtes Gas) ist.

6. Verfahren nach Anspruch 5,
dadurch gekennzeichnet, daß die Absorptionseinheit ein mit beliebig geformten Gelkörpern gefüllter Hohlkörper ist, und daß das Abwasser oder flüssige Gemische oder feuchtes Gas durch diese Absorptionseinheit geführt wird, wobei nach Beladen der Gele die Absorptionseinheit vom Flüssigkeits- oder Gasstrom abgekoppelt wird und die konzentrierte höhermolekulargewichtige Bestandteile enthaltende Lösung oder das von kondensierbaren Bestandteilen gereinigte Gas aus der Absorptionseinheit abgelassen wird, und daß anschließend durch Einwirken erhöhter Temperatur auf die Absorptionseinheit ein Kollabieren der Gele herbeigeführt wird, und daß die so erhaltene Reinlösung oder das Kondensat aus der Absorptionseinheit abgeführt wird.

7. Verfahren nach Anspruch 5,
dadurch gekennzeichnet, daß die Absorptionseinheit ein mit Gelkörpern, vorzugsweise annähernd kugelförmiger Form, gefüllter Hohlkörper ist und daß das Abwasser oder ein flüssiges Gemisch oder ein feuchtes Gas durch diese Absorptionseinheit geführt wird, wobei die Gelkörper nach Beladen der Gele vom Flüssigkeitsstrom oder Gasstrom aus dem Behälter ausgetragen werden (Wanderbett) und in einer Trenneinrichtung von der konzentrierten höhermolekulargewichtige Bestandteile enthaltenden Lösung bzw. vom getrockneten Gasstrom abgetrennt werden, und daß anschließend in einer separaten Einheit (Regenerationseiheit) durch Einwirken erhöhter Temperatur auf die Gelkörper ein Kollabieren der Gele herbeigeführt wird, und daß die so erhaltene Reinlösung bzw. das Kondensat aus der Regenerationseinheit abgeführt wird und die regenerierten Gelkörper wieder in die Absorptionseinheit eingebracht werden.

8. Verfahren nach Anspruch 5,
dadurch gekennzeichnet, daß die Absorptionseinheit ein mit beliebigen Stützkörpern gefüllter Hohlkörper ist, auf denen das Gel aufgebracht ist (Festbett), und daß das Abwasser oder ein flüssiges Gemisch oder ein feuchtes Gas durch diese Absorptionseinheit geführt wird, wobei nach Beladen der Gele die Absorptionseinheit vom Flüssigkeits- bzw. Gasstrom abgekoppelt wird und die konzentrierte höhermolekulargewichtige Bestandteile enthaltende Lösung bzw. der trockene Gasstrom aus der Absorptionseinheit abgelassen wird, und daß anschließend durch Einwirken erhöhter Temperatur auf die Absorptionseinheit ein Kollabieren der Gele herbeigeführt wird, und daß die so erhaltene Reinlösung bzw. das Kondensat aus der Absorptionseinheit abgeführt wird.

9. Verfahren nach Anspruch 5,
dadurch gekennzeichnet, daß die Absorptionseinheit ein mit Gelschnüren oder mit Gelfilmen gefüllter Hohlkörper ist, und daß das Abwasser oder ein flüssiges Gemisch oder ein feuchtes Gas durch diese Absorptionseinheit geführt wird, wobei nach Beladen der Gele die Absorptionseinheit vom Flüssigkeits- bzw. Gasstrom abgekoppelt wird und die konzentrierte höhermolekulargewichtige Bestandteile enthaltende Lösung bzw. das trockene Gas aus der Absorptionseinheit abgelassen wird, und daß anschließend durch Einwirken erhöhter Temperatur auf die Absorptionseinheit ein Kollabieren der Gele herbeigeführt wird, und daß die so erhaltene Reinlösung bzw. das Kondensat aus der Absorptionseinheit abgeführt wird.

10. Verfahren nach Anspruch 5,
dadurch gekennzeichnet, daß der Prozeßstrom ein Abwasser oder ein flüssiges Gemisch ist, und daß die Absorptionseinheit eine mit Gelkörpern befüllte Vorrichtung zur Feststoffextraktion (Schnecken, Becherwerkextraktoren, Karusselextraktoren etc.) ist.

11. Verfahren nach Anspruch 5,
dadurch gekennzeichnet, daß der Prozeßstrom ein feuchtes Gas ist, und daß die Absorptionseinheit eine mit Gel gefüllte Vorrichtung zur Absorptionstrocknung feuchter Gase ist.

12. Verfahren nach Anspruch 5 bis 11,
dadurch gekennzeichnet, daß die Temperatureinwirkung dadurch erfolgt, daß durch die Absorptionseinheit eine Reinlösung oder gereinigte Lösung oder Prozeßwasser oder Gas mit erhöhter Temperatur geführt wird, so daß ein Kollabieren der Gele bewirkt wird, wobei gleichzeitig der dabei aus dem Gel austretende Strom von dem die Absorptionseinheit passierenden Strom aus der Absorptionseinheit mitgeführt wird.

13. Verfahren nach Anspruch 5 bis 11,
dadurch gekennzeichnet, daß die Temperaturein
wirkung dadurch erfolgt, daß durch die Absorptionseinheit ein warmer Gasstrom geführt wird, so daß ein Kollabieren der Gele bewirkt wird, wobei die aus dem Gel austretende Lösung nach dem Kollabieren aus der Absorptionseinheit abgelassen wird.

**14.** Verfahren nach Anspruch 5 bis 11,
dadurch gekennzeichnet, daß die Temperatureinwirkung indirekt durch einen um den Behälter angeordneten Mantel oder eine im Behälter ange
ordnete indirekte Wärmeübertragungsfläche erfolgt, durch die ein warmes Medium geführt wird, so daß ein Kollabieren der Gele bewirkt wird, wobei die aus dem Gel austretende Lösung nach dem Kollabieren aus der Absorptionseinheit abgelassen wird.

**15.** Verfahren nach Anspruch 5 bis 11,
dadurch gekennzeichnet, daß die Temperatureinwirkung durch Strahlung (Mikrowellen) erfolgt, so daß ein Kollabieren der Gele bewirkt wird, wobei die aus dem Gel austretende Lösung nach dem Kollabieren aus der Absorptionseinheit abgelassen wird.

**16.** Verfahren nach Anspruch 5 bis 14,
dadurch gekennzeichnet, daß nach dem Ablassen der die höhermolekulargewichtigen Bestandteile enthaltenden konzentrierten Lösung ein Spülschritt erfolgt, wobei die Spülflüssigkeit ebenfalls aus der Absorptionseinheit entfernt wird.

**17.** Verfahren nach Anspruch 5,
dadurch gekennzeichnet, daß der Prozeßstrom ein
Abwasser oder ein flüssiges Gemisch ist, daß die Absorptionseinheit in Form einer über zwei Umlenkrollen umlaufenden Endlos-Gelfolie oder flexibles Gewebe mit auf der Außenfläche der Folie oder des Gewebes, oder zwischen zwei Folien oder Geweben aufgebrachten Gelen ausgebildet ist, wobei die Absorptionseinheit so angeordnet ist, daß ein Teilbereich der umlaufenden Folie durch das Abwasser geführt wird, und daß im Bereich der sich außerhalb der Lösung befindenden umlaufenden Gelfolie oder des umlaufenden flexiblen Gewebes das Gel durch Temperatureinwirkung zum Kollabieren gebracht wird.

**18.** Verfahren nach Anspruch 17,
dadurch gekennzeichnet, daß die Umlaufgeschwindigkeit und die Fläche der Gelfolie auf das zu reinigende Volumen des Abwassers ausgelegt sind.

**19.** Verfahren nach Anspruch 18,
dadurch gekennzeichnet, daß die Wärmeeinwirkung durch Wärmeaustauscher, durch Strahlung (Mikrowellen) oder durch einen Luftstrom erreicht wird.

**20.** Verfahren nach Anspruch 5,
dadurch gekennzeichnet, daß der Prozeßstrom ein Abwasser oder ein flüssiges Gemisch ist, daß die Absorptionseinheit in Form eines Folienpaketes in einem Plattenwärmeaustauscher so angeordnet ist, daß das Folienpaket mit dem Abwasser oder dem zu trennenden flüssigen Gemisch in Kontakt kommt (Primärkreislauf), daß nach der Beladung des Gels die die höhermolekulargewichtigen Bestandteile enthaltende Lösung abgelassen wird, daß das Gel-Folienpaket durch Temperatureinwirkung im Sekundärkreislauf des Plattenwärmeaustauschers zum Kollabieren gebracht wird, und daß die gereinigte Lösung nach dem Kollabieren des Gel-Folienpaketes abgelassen wird.

**21.** Verfahren nach Anspruch 5,
dadurch gekennzeichnet, daß der Prozeßstrom ein Abwasser ist, daß die Absorptionseinheit durch in Folien oder durchlässige Gewebe eingeschlossene Gele (Gelpakete) gebildet wird, und daß diese Gelpakete in das zu reinigende Abwasser eingebracht werden.

**22.** Verfahren nach Anspruch 1 bis 4,
dadurch gekennzeichnet, daß der Prozeßstrom ein flüssiges Gemisch verschiedener Substanzen mit unterschiedlichen Molekulargewichten und in unterschiedlicher Konzentration ist.

**23.** Verfahren nach Anspruch 22,
**gekennzeichnet** durch die Kombination folgender Verfahrensschritte:
a) daß das zu behandelnde flüssige Medium über eine Absorptionseinheit in Form einer Membran aus wasserunlöslichem hydrophilen Gel geführt wird, deren Porengröße und damit Trennschnitt durch Einwirken von physikalisch-chemischen Einflußgrößen eingestellt werden kann,

b) daß in Abhängigkeit von der Temperatur und dem über der Membran anliegenden Druckgefälle unterschiedliche Bestandteile der Lösung mit verschiedenen Molekulargewichten abgetrennt werden,

c) daß durch Einwirken von physikalisch-chemischen Einflußgrößen und durch die daraus resultierende Volumenänderung des Gels die Deckschichtbildung auf der Membran vermieden wird bzw. die Reinigung der Membran ermöglicht wird,

d) daß die niedrigmolekularen Bestandteile der Lösung durch die Membran treten (Permeat), während die höhermolekularen Bestandteile im Kreislaufstrom verbleiben (Retentat), und

e) daß durch Änderung der physikalisch-chemischen Einflußgrößen (z.B. Temperatur) die Porengröße eingestellt werden kann.

24. Verfahren nach mindestens einem der Ansprüche 1 bis 23,
dadurch gekennzeichnet, daß an das Gel bzw. die Membrane eine Druckdifferenz anlegbar ist.

25. Vorrichtung zur Durchführung des Verfahrens nach Anspruch 6,
dadurch gekennzeichnet, daß die Absorptionseinheit ein Hohlkörper (1) ist, der mit Gelen in Form von kugelförmigen Gelkörpern (2) gefüllt ist, wobei die Gelkörper (2) durch mindestens zwei Siebeinsätze (3,4) im Hohlkörper (1) fixiert sind, und daß der Hohlkörper (1) über geeignete Zu- und Abführungseinrichtungen (5,6,7) verfügt.

26. Vorrichtung nach Anspruch 25,
dadurch gekennzeichnet, daß der Hohlkörper (1) bevorzugt zylindrisch ist, daß die Siebeinsätze (3,4) im Inneren des zylindrischen Hohlkörpers (1) im Bereich des Bodens bzw. Deckels angeordnet sind und mit am Deckel bzw. Boden des Zylinders liegenden Zu- und Abführungseinrichtungen (5,6,7).

27. Vorrichtung zur Durchführung des Verfahrens nach Anspruch 17,
dadurch gekennzeichnet, daß die Absorptionseinheit in Form einer über zwei Umlenkrollen (8,9) umlaufenden Gelfolie (10) mit auf der Außenfläche der Folie (11) aufgebrachten Gelen (12) ausgebildet ist, wobei die Absorptionseinheit so angeordnet ist, daß ein Teilbereich der umlaufenden Gelfolie (10) durch das Abwasser geführt wird, und daß im Bereich der außerhalb der Lösung befindlichen Gelfolie (10) eine Wärmeübertragungseinrichtung (13) angeordnet ist.

28. Vorrichtung nach Anspruch 27,
dadurch gekennzeichnet, daß die Absorptionseinheit im Winkel zur Oberfläche des Abwassers angeordnet ist, so daß die aus der Gelfolie (10) austretende reine Lösung über eine geeignete Auffangeinrichtung (28) aufgefangen werden kann.

29. Vorrichtung zur Durchführung des Verfahrens nach Anspruch 21,
dadurch gekennzeichnet, daß die Absorptionseinheit in Form von in Folien (15) eingeschlossenen Gelen (16) als Gelpaket (14) ausgebildet ist.

30. Vorrichtung zur Durchführung des Verfahrens nach Anspruch 23,
dadurch gekennzeichnet, daß das hydrophile Gel (48) als Film (Membran/50) ausgebildet ist, der an verschiedenen Punkten mit einem darunterliegenden Stützgewebe (48) verknüpft ist, wobei die Volumenänderung des Gels überwiegend im rechten Winkel zu der Hauptströmungsrichtung erfolgt.

31. Vorrichtung zur Durchführung des Verfahrens nach Anspruch 30,
dadurch gekennzeichnet, daß das hydrophile Gel als Rohrmodul (47) ausgebildet ist, das an verschiedenen Punkten des Stützgewebes (49) fixiert ist, so daß es in Abhängigkeit von den chemisch-physikalischen Einflußgrößen nur zu einer radialen Ausdehnung des Polymers kommt.

32. Vorrichtung zur Durchführung des Verfahrens nach Anspruch 23,
dadurch gekennzeichnet, daß das hydrophile Gel in den Poren eines porösen Stützkörpers (45, 46) ausgebildet ist, das durch die Gelbildung in den Poren fixiert ist.

33. Vorrichtung zur Durchführung des Verfahrens nach Anspruch 23,
dadurch gekennzeichnet, daß das hydrophile Gel durch Haftvermittler bei der Synthese mit dem Stützkörper verbunden wird.

Figur 1:

a.)

b.)

gereinigte Lösung

Reinwasser

konzentrierte
Lösung

Abwasser

Figur 2:

a)

Abwasser

konz.
Lösung

b)

gereinigte
Lösung

c)

Figur 3:

Figur 4 :

gereinigtes
Lösungsmittel

konzentrierte
Lösung

Figur 5:

konzentrierte
Lösung

39

40

41

42

2

53

44

gereinigte Lösung

52

38

Figur 6:

a.)

45

b.)

46

Figur 7 :